# EUROPEAN PATENT APPLICATION

(11) **EP 3 862 723 A2**
(43) Date of publication of application: **11.08.2021**
(21) Application number: 21177005.2
(22) Date of filing: 01.06.2021
(51) Int. Cl.: G01C 21/32, G01C 21/00, G08G 1/00

(54) **METHOD AND APPARATUS FOR DETECTING MAP QUALITY**

(30) Priority: 09.06.2020 CN 202010518733
(71) Applicant: BEIJING BAIDU NETCOM SCIENCE AND TECHNOLOGY CO. LTD., 100085 Beijing (CN)
(72) Inventor: ZHOU, Dongyi, Beijing, 100085 (CN); WANG, Jing, Beijing, 100085 (CN); DONG, Fangfang, Beijing, 100085 (CN); MAO, Jiming, Beijing, 100085 (CN)
(74) Representative: Maiwald Patent- und Rechtsanwaltsgesellschaft mbH

(57) **Abstract**

The present application discloses to a method and an apparatus for detecting map quality, and a computer program product. The implementation solution is acquiring a map to be detected; acquiring traffic indication information marked on the map; acquiring actual road test data of each detection area on the map; acquiring a vehicle driving behavior of each detection area according to the actual road test data of each detection area; and generating a detection result of the map according to the traffic indication information and the vehicle driving behavior corresponding to each detection area. Thus, automatic detection of the map can be realized by the traffic indication information marked on the map and the vehicle driving behavior corresponding to each detection area, and the detection efficiency and the detection accuracy of high definition map can be improved.

## Description

### TECHNICAL FIELD

The present disclosure generally relates to the automatic driving field of information technology field, and more particularly, to a method and an apparatus for detecting map quality and a computer program product.

### BACKGROUND

At present, a high-precision map for automatic driving is a very important part of automatic driving. Therefore, it is needed to ensure the quality of the map.

In related technologies, detection is performed only on the logic between various elements on the map. For example, it can be detected that traffic light information at an intersection is not marked, but it cannot be detected whether the marked traffic light information is correct. Therefore, the detection results are not accurate enough.

### SUMMARY

The present disclosure provides a method and an apparatus for detecting map quality and a computer program product.

According to a first aspect of embodiments of the present disclosure, there is provided a method for detecting map quality, including:
acquiring a map to be detected;
acquiring traffic indication information marked on the map;
acquiring actual road test data of each detection area on the map;
acquiring a vehicle driving behavior of each detection area according to the actual road test data of each detection area; and
generating a detection result of the map according to the traffic indication information and the vehicle driving behavior corresponding to each detection area.

According to a second aspect of embodiments of the present disclosure, there is provided an apparatus for detecting map quality, including:
a first acquisition module configured to acquire a map to be detected;
a second acquisition module configured to acquire traffic indication information marked on the map;
a third acquisition module configured to acquire actual road test data of each detection area on the map;
a fourth acquisition module configured to acquire a vehicle driving behavior of each detection area according to the actual road test data of each detection area; and
a generation module configured to generate a detection result of the map according to the traffic indication information and the vehicle driving behavior corresponding to each detection area.

According to a third aspect of embodiments of the present disclosure, there is provided a computer program product including a computer program. The computer program is used to cause a processor to implement the method for detecting map quality according to the first aspect of embodiments of the present disclosure.

An embodiment of the present disclosure has the following advantages or beneficial effects:
By acquiring a map to be detected, acquiring traffic indication information marked on the map, acquiring actual road test data of each detection area in the map, acquiring a vehicle driving behavior of each detection area according to the actual road test data of each detection area, and realizing automatic detection of the map according to the traffic indication information and the vehicle driving behavior corresponding to each detection area, an embodiment of the present disclosure can improve the detection efficiency and the detection accuracy of high definition map.

It should be understood that the content described here is not intended to identify the key or important features of the embodiments of the present disclosure, nor is it intended to limit the scope of the present disclosure. Other features of the present disclosure will be easily understood through the following description.

### BRIEF DESCRIPTION OF THE DRAWINGS

The drawings are used to better understand the solution and are not to be considered as limiting the present application, wherein
Fig. 1 is the schematic flow chart of the method for detecting map quality according to the first embodiment of the present disclosure;
Fig. 2 is the schematic flow chart of the method for detecting map quality according to the second embodiment of the present disclosure;
Fig. 3 is the schematic flow chart of the method for detecting map quality according to the third embodiment of the present disclosure;
Fig. 4 is the schematic structure diagram of the apparatus for detecting map quality according to the fourth embodiment of the present disclosure;
Fig. 5 is the schematic structure diagram of the apparatus for detecting map quality according to the fifth embodiment of the present disclosure;
Fig. 6 is the schematic structure diagram of the apparatus for detecting map quality according to the sixth embodiment of the present disclosure; and
FIG 7 is a block diagram of an electronic device for implementing the method for detecting map quality according to an embodiment of the present disclosure.

### DETAILED DESCRIPTION

The following describes exemplary embodiments of the present disclosure with reference to the accompanying drawing, in which various details of the embodiments of the present application are included to facilitate understanding, and should be merely exemplary. Therefore, those of ordinary skill in the art should realize that various changes and modifications can be made to the embodiments described herein without departing from the scope and spirit of the present application. Similarly, for clarity and conciseness, descriptions of the known functions and structures are omitted in the following description.

The following describes the method and apparatus for detecting map quality, electronic device, and storage medium of the embodiments of the present disclosure with reference to the accompanying drawings.

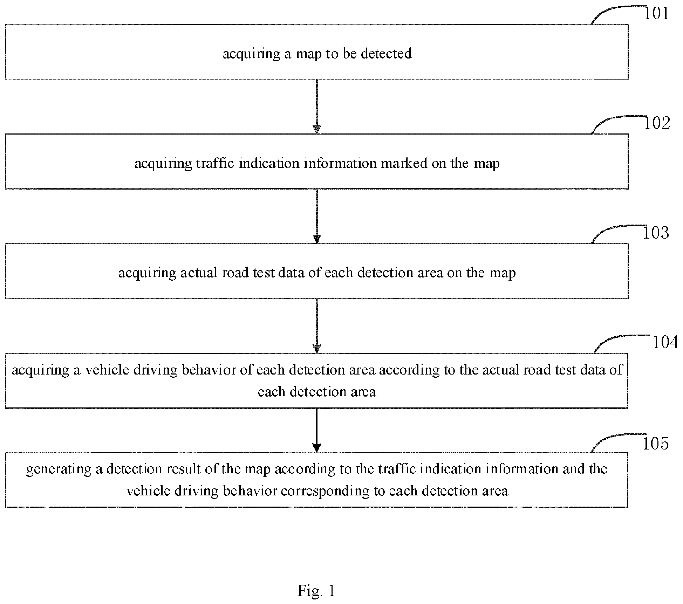

Fig. 1 is the schematic flow chart of the method for detecting map quality according to the first embodiment of the present disclosure.

In practical applications, the quality of the map directly affects the path planning and driving of automatic driving. Therefore, it is needed to ensure the quality of the map. Generally, the efficiency of manual quality detection of the map is relatively low, or detection is performed on the logic between various elements in the map, which causes that the detection results are not accurate enough.

For example, in the case that there are a left-turn light and a straight-going light at an intersection, if in the process of map making, the left-turn light is marked as control of straight going and bound to a straight lane, and the straight-going light is marked as control of left-turn and bound to a left-turning lane, this error cannot be detected by the conventional detection methods of the map because the static logic is not incorrect.

In view of the above problems, the present disclosure provides the method for detecting map quality. The method includes acquiring the map to be detected, acquiring traffic indication information marked on the map, acquiring actual road test data of each detection area on the map, acquiring the vehicle driving behavior according to the actual road test data, and realizing automatic detection of the map according to the traffic indication information and the vehicle driving behavior corresponding to each detection area, so that the efficiency and accuracy of high-precision map detection can be improved.

Still taking the above example as an example, in the scenario where the straight-going light is red and the left-turning light is green, "Straight is green, and left-turning is red" is illustrated on the map with error, which indicates the self-driving vehicle can directly pass the intersection at this time. However, the vehicle driving behavior acquired according to the actual road test data is not to directly pass the intersection. Therefore, it can be deduced that the mark of the map is incorrect. In this way, data problems on the map can be automatically found by identification of the conflict between the traffic indication information marked on the map and the vehicle driving behavior.

Specifically, as shown in Fig. 1, the method for detecting map quality may include the following steps.

Step 101, the map to be detected is acquired.

Step 102, traffic indication information marked on the map is acquired.

In an embodiment of the present disclosure, one or more maps that have been made can be selected for quality detection as needed. It can be understood that the map is marked with traffic indication information that may be at least one of the following: traffic light information such as a traffic light color; permitted driving direction information at an intersection, for example the permitted driving direction at the intersection is a left turn; the permitted driving direction information of the lane, for example the permitted driving direction of the lane is a straight lane; lane line information such as a double yellow line; and the stop line information at an intersection such as a stop line marked at the intersection, etc. Thus, different traffic indication information marked on the map can be detected, which can increase the diversity of detection, and further improve the accuracy of the map.

Step 103, actual road test data of each detection area on the map is acquired.

Step 104, a vehicle driving behavior of each detection area according to the actual road test data of each detection area is acquired.

In an embodiment of the present disclosure, there are multiple detection areas on the map. In order to improve the accuracy and diversity of detection, it is needed to acquire the actual road test data of each detection area of the map. The actual road test data can be vehicle coordinates, or perception data such as traffic light information, lane lines, distance between vehicles, and distance between a vehicles and an object, which is obtained by perception modules such as a lidar, a millimeter-wave radar and a camera perceiving the road and surrounding environment during vehicle driving.

The Vehicle driving behavior is acquired via different actual road test data by different ways, which is described as an example as follows.

The first example: the actual road test data includes vehicle coordinates, the current vehicle coordinates and the vehicle coordinates within the preset range around the current vehicle coordinates are determined as the vehicle coordinates in the detection area, and the vehicle driving behavior corresponding to the detection area is determined according to the vehicle coordinates in the detection area.

The second example: the actual road test data includes perception data, the perception data of the road and surrounding environment obtained by each vehicle in the detection area is acquired, and the vehicle driving behavior corresponding to the detection area is determined according to the perception data of the road and surrounding environment.

The third example: the vehicle driving behavior corresponding to the detection area is determined according to the vehicle coordinates and the perception data, for example, going straight in lane 1 is determined according to the vehicle coordinates and the straight driving light is green is determined according to the perception data, thus the vehicle driving behavior is that the vehicle is going straight in lane 1 and the straight-going light is green.

It should be noted that the above detection areas can be any detection area, and the vehicle driving behavior corresponding to the detection area is determined via the actual road test data of each detection area.

Step 105, a detection result of the map is generated according to the traffic indication information and the vehicle driving behavior corresponding to each detection area.

In an embodiment of the present disclosure, standard indication information corresponding to the vehicle driving behavior may be determined according to the vehicle driving behavior corresponding to each detection area such as an intersection area, a lane area, and a parking area that is set selectively according to the application scenario. Then the traffic indication information marked on the map and the standard indication information corresponding to the same detection area are compared with each other. If they are consistent, it can be determined that the traffic indication information marked on the map is accurate. If they are inconsistent, it can be determined that the traffic indication information marked on the map is not accurate and further correction is needed to improve the automatic driving experience.

As a possible implementation, whether the traffic indication information corresponding to the detection area is correct is determined according to the traffic indication information and the vehicle driving behavior corresponding to the detection area, and the detection result is generated according to the determination result.

As an example of a scenario, according to the traffic indication information corresponding to the detection area that is the driving direction information allowed by the lane "Road A, Lane 1 is going straight and Lane 2 is turning right" and vehicle driving behavior that is "Road A, Lane 2 is going straight and Lane 1 is turning right ", the traffic indication information corresponding to the detection area marked on the map is determined to be incorrect, and the detection result is generated, such as "Road A, Lane 1 is going straight and Lane 2 is turning right is marked incorrectly".

As an example of another scenario, the traffic indication information of the detection area marked on the map and the perception data of the detection area that is information such as a traffic light color are acquired, the traffic indication information and the vehicle driving behavior are compared, and the detection result is generated. For example, the map marks that the straight traffic light 123 controls lane lane_1, it is obtained according to the perception data that the straight traffic light 123 is red, and vehicle X crosses the stop line in lane_1 and goes straight. Accordingly, vehicle X may have run a red light according to the traffic indication information marked on the map. However, since all vehicles generally run red lights, it is determined that there is a problem with the traffic indication information marked in the detection area on the map, for example, the traffic light 123 does not actually control lane_1 or does not control going straight.

In an embodiment of the present disclosure, the detection result of the map includes the traffic indication information corresponding to each detection area on the map is marked incorrectly or correctly. For example, it is marked incorrectly that lane 1 is going straight and lane 2 is turning right in road A in the detection area, for another example, it is marked incorrectly that the traffic light 123 at intersection B in the detection area controls lane_1, and for further example, the stop line information at intersection C in the detection area is marked correctly.

In addition, in order to improve the efficiency of subsequent processing, it is also possible to directly perform de-duplication processing on the traffic indication information whose detection result is incorrect-marking and then regenerate the detection result to be sent to subsequent map repair module for rapid repair processing, which may be selectively according to application scenario.

In summary, the method for detecting map quality in the present disclosure acquires the traffic indication information marked on the map by acquiring the map to be detected, acquires the actual road test data of each detection area on the map, acquires the vehicle driving behavior of each detection area according to the actual road test data of each detection area, and realizes automatic detection of the map according to the traffic indication information and the vehicle driving behavior corresponding to each detection area, thereby improving the detection efficiency and detection accuracy of map.

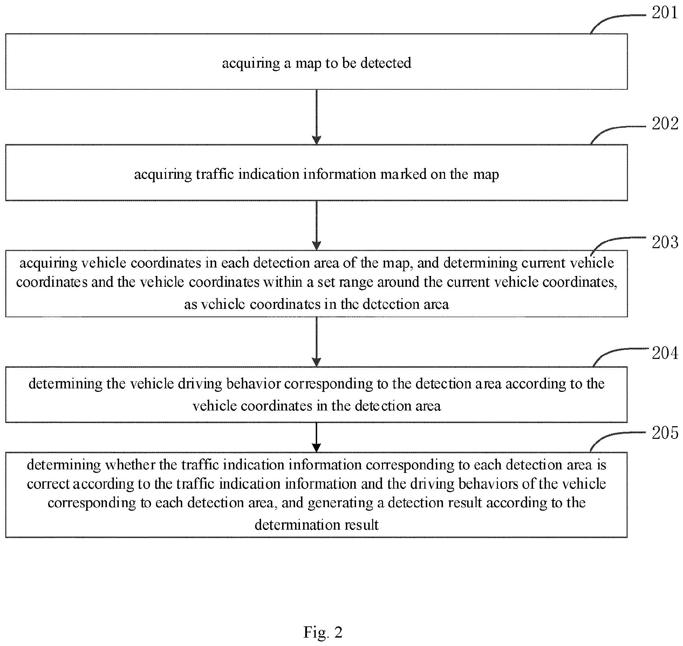

In accordance with the description of the above embodiments, the vehicle driving behavior is acquired via different actual road test data by different ways, and the detection result of the map may be generated by different manners that are selected according to actual application needs. In the following, with reference to Fig. 2, it is described as an example that the vehicle driving behavior is acquired by the vehicle coordinates and whether the traffic indication information corresponding to the detection area is correct is determined by the traffic indication information and the vehicle driving behavior corresponding to the detection area.

Fig. 2 is the schematic flow chart of the method for detecting map quality according to the second embodiment of the present disclosure.

As shown in Fig. 2, the method for detecting map quality may include the following steps.

Step 201, the map to be detected is acquired.

Step 202, traffic indication information marked on the map is acquired.

It should be noted that step 201 to step 202 are the same as step 101 to step 102, and please refer to the description of step 101 to step 102 for details, which will not be described in detail here.

Step 203, vehicle coordinates in each detection area of the map are acquired., and current vehicle coordinates and the vehicle coordinates within a preset range around the current vehicle coordinates are determined as vehicle coordinates in the detection area.

Step 204, the vehicle driving behavior corresponding to the detection area is determined according to the vehicle coordinates in the detection area.

In an embodiment of the present disclosure, the vehicle coordinates may be acquired through a vehicle positioning system etc.; and the driving trajectory and stationary state of the current vehicle may be acquire through the current vehicle coordinates that are vehicle coordinates corresponding to different time point, so as to determine the vehicle driving behavior of the current vehicle such as going straight, turning left, turning right, parking, changing lanes, etc.; and the vehicle coordinates within a preset range around the current vehicle coordinates, for example the vehicle coordinates of each vehicle within 2 meters, are acquired, so as to acquire the vehicle driving behavior of each vehicle; and the vehicle driving behavior corresponding to the detection area is determined according to the vehicle coordinates in the detection area that are driving trajectory of each vehicle in the detection area, for example, the detection area is intersection A, and the vehicle driving behavior corresponding to intersection A can be acquired, such as going straight in lane 1 or turn left in lane 2.

Therefore, the vehicle driving behavior corresponding to the detection area can be determined rapidly by the vehicle coordinates in the detection area, thus improving efficiency of map quality detection.

Step 205, whether the traffic indication information corresponding to each detection area is correct is determined according to the traffic indication information and the driving behaviors of the vehicle corresponding to each detection area, and a detection result is generated according to the determination result

In an embodiment of the present disclosure, it is determined whether the traffic indication information corresponding to each detection area is correct according to the traffic indication information and the driving behavior corresponding to each detection area, which may be understood as for the same detection area real traffic indication information can be determined according to the driving behavior; and the real traffic indication information is compared with the traffic indication information corresponding to the detection area marked on the map to determine whether they are consistent, so as to generate the detection result. Therefore, the detection result can be generated rapidly according to the determination result, thus improving the detection efficiency.

As a possible implementation, whether there is a conflict between the traffic indication information and the vehicle driving behavior corresponding to each detection area is determined, if there is a conflict, it is determined that the traffic indication information corresponding to the detection area is incorrect, and if there is no conflict, it is determined that the traffic indication information corresponding to the detection area is correct.

In other words, the traffic indication information marked on the map is compared with the vehicle driving behavior, and if for example, the vehicle driving behavior is stopping driving, when the traffic indication information marked on the map is green, there is conflict, or the vehicle driving behavior is driving straight, when the traffic indication information marked on the map is a straight red light, there is conflict, which both can determine that the traffic indication information corresponding to the detection area is incorrect.

In an embodiment of the present disclosure, de-duplication processing is performed on the traffic indication information corresponding to the detection area for which the determination result is incorrect, and the detection result is generated according to the traffic indication information corresponding to the detection area after de-duplication processing.

In summary, the method for detecting map quality in the present disclosure acquires the traffic indication information marked on the map by acquiring the map to be detected, acquiring vehicle coordinates in each detection area of the map, and determining current vehicle coordinates and the vehicle coordinates within a preset range around the current vehicle coordinates, as vehicle coordinates in the detection area; determining the vehicle driving behavior corresponding to the detection area according to the vehicle coordinates in the detection area; determining whether the traffic indication information corresponding to each detection area is correct according to the traffic indication information and the driving behaviors of the vehicle corresponding to each detection area, and generating a detection result according to the determination result. Therefore, the map quality can be detected rapidly and accurately, thus reducing the cost and improving the detection accuracy.

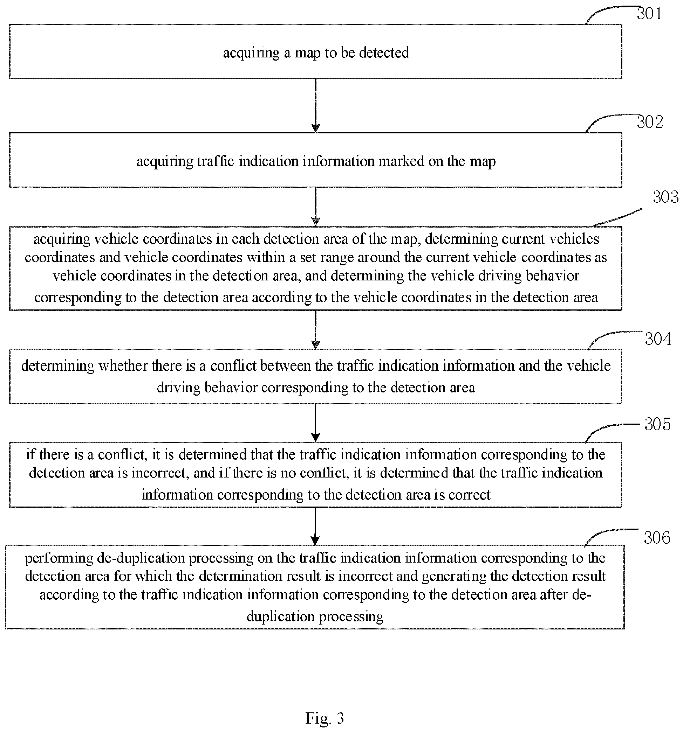

Fig. 3 is the schematic flow chart of the method for detecting map quality according to the second embodiment of the present disclosure.

As shown in Fig. 3, the method for detecting map quality may include the following steps.

Step 301, the map to be detected is acquired.

Step 302, traffic indication information marked on the map is acquired.

It should be noted that step 301 to step 302 are the same as step 101 to step 102, and please refer to the description of step 101 to step 102 for details, which will not be described in detail here.

Step 303, vehicle coordinates in each detection area of the map are acquired, determining current vehicles coordinates and vehicle coordinates within a preset range around the current vehicle coordinates as vehicle coordinates in the detection area, and determining the vehicle driving behavior corresponding to the detection area according to the vehicle coordinates in the detection area.

In an embodiment of the present disclosure, the vehicle coordinates may be acquired through a vehicle positioning system etc.; and the driving trajectory of the current vehicle may be acquire through the current vehicle coordinates that are vehicle coordinates corresponding to different time point, so as to determine the vehicle driving behavior of the current vehicle such as going straight, turning left, turning right, changing lanes, etc.; and the vehicle coordinates within a preset range around the current vehicle coordinates, for example the vehicle coordinates of each vehicle within 2 meters, are acquired, so as to acquire the vehicle driving behavior of each vehicle; and the vehicle driving behavior corresponding to the detection area is determined according to the vehicle coordinates in the detection area that are driving trajectory of each vehicle in the detection area, for example, the detection area is intersection A, and the vehicle driving behavior corresponding to intersection A can be acquired, such as going straight in lane 1 or turn left in lane 2.

Step 304, whether there is a conflict between the traffic indication information and the vehicle driving behavior corresponding to the detection area is determined.

Step 305, if there is a conflict, it is determined that the traffic indication information corresponding to the detection area is incorrect, and if there is no conflict, it is determined that the traffic indication information corresponding to the detection area is correct

Specifically, whether the traffic indication information is marked correctly is determined according to whether there is a conflict between the traffic indication information and the vehicle driving behavior corresponding to each detection area, so that the map quality can be detected rapidly and accurately.

In an embodiment of the present disclosure, the determination whether there is a conflict between the traffic indication information and the vehicle driving behavior corresponding to each detection area may be made through a preset algorithm or a preset rule logic library, which is described as an example as follows.

As a possible implementation, a preset rule logic library is acquired, and whether there is a conflict between the traffic indication information and the vehicle driving behavior corresponding to each detection area is determined according to the preset rule logic library.

Specifically, the preset rule logic library is established in advance based on the traffic indication information and the vehicle driving behavior, including a vehicle driving behavior that does not match the traffic indication information.

For example, the preset rule logic library includes one or more of the following: when the traffic indication information marked on the map is a green light, the vehicle driving behavior is stopping driving; when the traffic indication information marked on the map is a red light, the driving behavior of the vehicle is driving; When the traffic indication information marked on the map indicates that the allowed driving direction at the intersection is left turn, the vehicle driving behavior is straight; the driving direction of the vehicle driving behavior does not match the allowed driving direction of the lane marked on the map; where the lane line information marked on the map is double yellow line, the driving behavior of the vehicle is to press the double yellow line; at the intersection where the stop line is not marked on the map, the driving behavior of the vehicle is parking.

Thus, detection efficiency can be further improved by the pre-set rule logic library to determine whether there is a conflict between the traffic indication information and the vehicle driving behavior corresponding to each detection area, and whether there is a conflict between the traffic indication information and the vehicle driving behavior can be identified easily and efficiently by the pre-set rule logic library including the vehicle driving behavior that does not match the traffic indication information.

As another possible implementation, the traffic indication information and the vehicle driving behavior corresponding to each detection area are input into a preset rule model for calculation, and whether there is a conflict is determined according to the calculation result such as 1 or 0.

If there is a conflict, it is determined that the traffic indication information corresponding to the detection area is incorrect, and if there is no conflict, it is determined that the traffic indication information corresponding to the detection area is correct.

Step 306, de-duplication processing is performedon the traffic indication information corresponding to the detection area for which the determination result is incorrect and generating the detection result according to the traffic indication information corresponding to the detection area after de-duplication processing

In an embodiment of the present disclosure, de-duplication processing is performed directly on the traffic indication information corresponding to the detection area for which the determination result is incorrect, and then the detection result according to the traffic indication information corresponding to the detection area after de-duplication processing is generated, by which the accuracy requirements of automatic driving can be further met.

In summary, the method for detecting map quality in the present disclosure acquires the traffic indication information marked on the map by acquiring the map to be detected, acquires vehicle coordinates in each detection area of the map, determines current vehicles coordinates and vehicle coordinates within a preset range around the current vehicle coordinates as vehicle coordinates in the detection area, determines the vehicle driving behavior corresponding to the detection area according to the vehicle coordinates in the detection area, determines whether there is a conflict between the traffic indication information and the vehicle driving behavior corresponding to the detection area, wherein if there is a conflict, it is determined that the traffic indication information corresponding to the detection area is incorrect, and if there is no conflict, it is determined that the traffic indication information corresponding to the detection area is correct, performs de-duplication processing on the traffic indication information corresponding to the detection area for which the determination result is incorrect and generates the detection result according to the traffic indication information corresponding to the detection area after de-duplication processing. Thus, the map can be detected automatically by the vehicle driving behavior and the traffic indication information marked on the map, thereby improving the efficiency and accuracy of high definition map detection.

According to embodiments of the present application, an apparatus for detecting map quality is further provided.

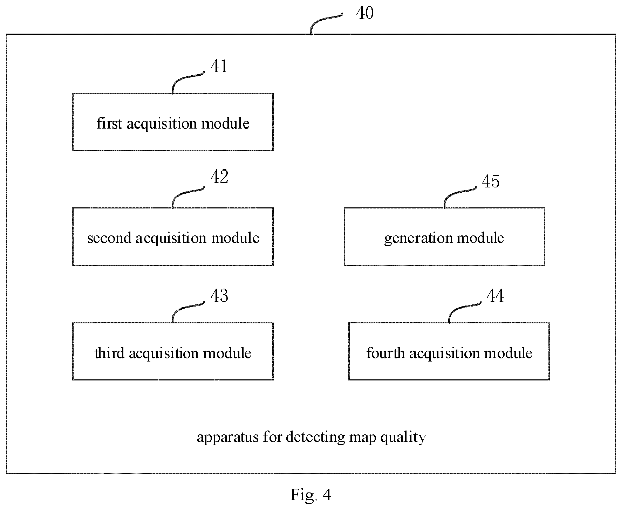

Fig. 4 is the schematic structure diagram of the apparatus for detecting map quality according to the fourth embodiment of the present disclosure.

As shown in Fig. 4, apparatus 40 for detecting map quality may include: a first acquisition module 41, a second acquisition module 42, a third acquisition module 43, a fourth acquisition module 44 and a generation module 45.

The first acquisition module 41 is configured to acquire a map to be detected.

The second acquisition module 42 is configured to acquire traffic indication information marked on the map.

The third acquisition module 43 is configured to acquire actual road test data of each detection area on the map.

The fourth acquisition module 44 is configured to acquire a vehicle driving behavior of each detection area according to the actual road test data of each detection area.

The generation module 45 is configured to generate a detection result of the map according to the traffic indication information and the vehicle driving behavior corresponding to each detection area.

In an embodiment of the present disclosure, the traffic indication information comprises at least one of the following: traffic light information, permitted driving direction information at an intersection, permitted driving direction information in a lane, lane line information, and stop line information at an intersection.

In an embodiment of the present disclosure, actual road test data includes vehicle coordinates, and the fourth acquisition module is further configured to: determine current vehicle coordinates and vehicle coordinates within a preset range around the current vehicle coordinates, as vehicle coordinates in the detection area; and determine the vehicle driving behavior corresponding to the detection area according to the vehicle coordinates in the detection area.

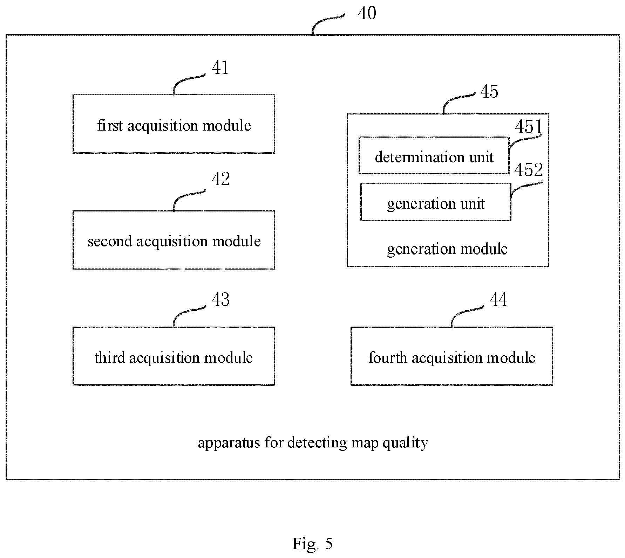

In an embodiment of the present disclosure, as shown in Fig. 5, on the basis of Fig. 4, the generation module 45 includes: a determination unit 451 and a generation unit 452.

The determination unit 451 is configured to determine whether the traffic indication information corresponding to each detection area is correct according to the traffic indication information and the vehicle driving behavior corresponding to each detection area.

The generation unit 452 is configured to generate the detection result according to a determination result.

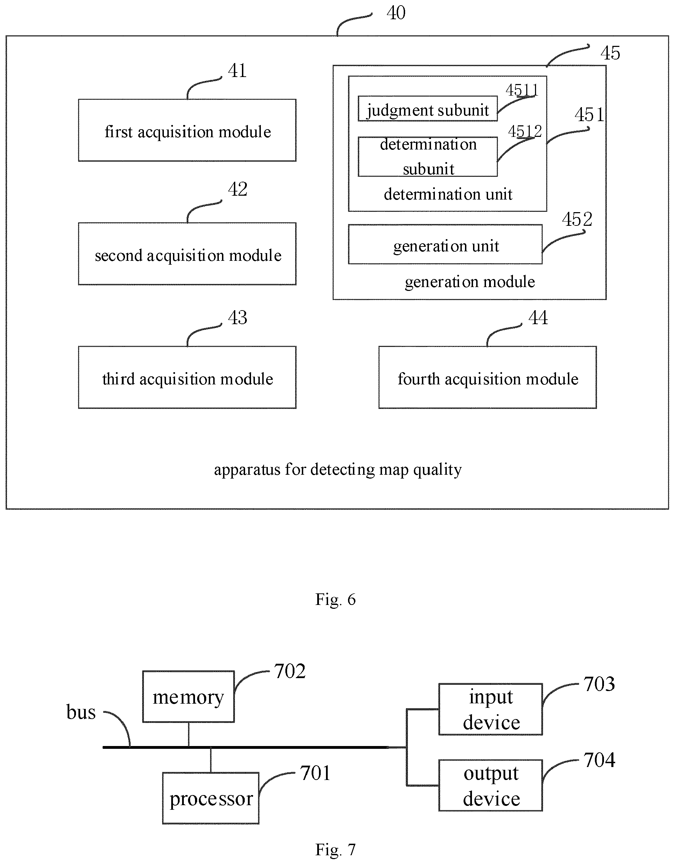

In an embodiment of the present disclosure, as shown in Fig. 6, on the basis of Fig. 5, the determination unit 451 includes: a judgment subunit 4511 and a determination subunit 4522.

The judgment subunit 4511 is configured to determine whether there is a conflict between the traffic indication information and the vehicle driving behavior corresponding to the detection area.

The determination subunit 4522 is configured to determine that the traffic indication information corresponding to the detection area is incorrect if there is a conflict, and determine that the traffic indication information corresponding to the detection area is correct if there is no conflict.

In an embodiment of the present disclosure, the judgment subunit 4511 is further configured to acquire a preset rule logic library; and determine whether there is a conflict between the traffic indication information and the vehicle driving behavior corresponding to the detection area according to the preset rule logic library.

In an embodiment of the present disclosure, the preset rule logic library comprises the vehicle driving behavior that does not match the traffic indication information.

In an embodiment of the present disclosure, the generation unit 452 is further configured to perform de-duplication processing on the traffic indication information corresponding to the detection area for which the determination result is incorrect; and generate the detection result according to the traffic indication information corresponding to the detection area after de-duplication processing.

In summary, by acquiring a map to be detected, acquiring traffic indication information marked on the map, acquiring actual road test data of each detection area on the map, acquiring a vehicle driving behavior of each detection area according to the actual road test data of each detection area, and realizing automatic detection of the map according to the traffic indication information and the vehicle driving behavior corresponding to each detection area, the apparatus for detecting map quality of the present disclosure can improve the detection efficiency and detection accuracy of high definition map.

According to embodiments of the present application, an electronic device and a readable storage medium are further provided.

According to embodiments of the present application, a computer program product is further provided. The computer program product includes a computer program, and the computer program is configured to cause a processor to implement the method for detecting map quality according to the above embodiments of the present disclosure.

As shown in FIG 7, it is a block diagram of an electronic device for the method for detecting map quality according to an embodiment of the present application. The electronic device is intended to represent various forms of digital computers, such as laptop computers, desktop computers, workbenches, personal digital assistants, servers, blade servers, mainframe computers, and other suitable computers. Electronic device may also represent various forms of mobile devices, such as personal digital assistants, cellular phones, intelligent phones, wearable devices, and other similar computing devices. The components shown here, their connections and relations, and their functions are merely examples, and are not intended to limit the implementation of the application described and/or required herein.

As shown in FIG. 7, the electronic device includes: one or more processors 701, a memory 702, and interfaces for connecting various components which include a high-speed interface and a low-speed interface. The various components are interconnected using different buses and can be mounted on a common motherboard or otherwise installed as required. The processor may process instructions executed within the electronic device, which include instructions stored in or on a memory to display graphic information of a graphical user interface (GUI) on an external input/output device (such as a display device coupled to the interface). In other embodiments, multiple processors and/or multiple buses can be used with multiple memories, if desired. Similarly, multiple electronic device can be connected, each providing some of the necessary operations (for example, as a server array, a group of blade servers, or a multiprocessor system). A processor 701 is taken as an example in FIG 7.

The memory 702 is a non-transitory computer-readable storage medium according to an embodiment of the present application. The memory stores instructions executable by at least one processor, so that the at least one processor executes the method for detecting map quality according to the embodiments of the present application. The non-transitory computer-readable storage medium of the present application stores computer instructions, which are used to cause a computer to execute the method for detecting map quality according to the embodiments of the present application.

As a non-transitory computer-readable storage medium, the memory 702 can be used to store non-transitory software programs, non-transitory computer executable programs, and modules, such as program instructions/modules/units corresponding to the method for detecting map quality according to the embodiments of the present application (for example, the first acquisition module 41, the second acquisition module 42, the third acquisition module 43, the fourth acquisition module 44 and the generation module 45 as shown in Fig. 4). The processor 701 executes various functional applications and data processing of the server by running non-transitory software programs, instructions, and modules stored in the memory 702, that is, the method for detecting map quality according to the embodiments of the present application can be implemented.

The memory 702 may include a storage program area and a storage data area, where the storage program area may store an operating system and an application program required for at least one function; and the storage data area may store data created according to the use of the electronic device for the method for detecting map quality, etc. In addition, the memory 702 may include a high-speed random access memory, and may also include a non-transitory memory, such as at least one magnetic disk storage device, a flash memory device, or other non-transitory solid-state storage device. In some embodiments, the memory 702 may optionally include a memory remotely set relative to the processor 701, and these remote memories may be connected to the electronic device for the method for detecting map quality via a network. Examples of the above network include, but are not limited to, the Internet, an intranet, a local area network, a mobile communication network, and combinations thereof.

The electronic device for the method for detecting map quality may further include an input device 703 and an output device 704. The processor 701, the memory 702, the input device 703, and the output device 704 may be connected through a bus or in other manners. In FIG. 7, the connection through the bus is taken as an example.

The input device 703 can receive inputted numeric or character information, and generate key signal inputs related to user settings and function control of an electronic device for the method for detecting map quality, such as a touch screen, a keypad, a mouse, a trackpad, a touchpad, a pointing stick, one or more mouse buttons, a trackball, a joystick and other input devices. The output device 704 may include a display device, an auxiliary lighting device (for example, an LED), a haptic feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein can be implemented in digital electronic circuit systems, integrated circuit systems, application specific integrated circuits (ASICs), computer hardwares, firmwares, softwares, and/or combinations thereof. These various embodiments may include: implementation in one or more computer programs executable on and/or interpretable on a programmable system including at least one programmable processor, which may be a dedicated or general-purpose programmable processor that may receive data and instructions from a storage system, at least one input device, and at least one output device, and transmit data and instructions to the storage system, the at least one input device, and the at least one output device.

These computing programs (also known as programs, software, software applications, or codes) include machine instructions of a programmable processor and can be implemented using high-level procedures and/or object-oriented programming languages, and/or assembly/machine languages. As used herein, the terms "machine-readable medium" and "computer-readable medium" refer to any computer program product, device, and/or device used to provide machine instructions and/or data to a programmable processor (for example, magnetic disks, optical disks, memories, and programmable logic devices (PLDs)), include machine-readable media that receives machine instructions as machine-readable signals. The term "machine-readable signal" refers to any signal used to provide machine instructions and/or data to a programmable processor.

In order to provide interaction with the user, the systems and techniques described herein may be implemented on a computer having a display device (for example, a Cathode Ray Tube (CRT) or Liquid Crystal Display (LCD) monitor) for displaying information to the user; and a keyboard and pointing device (such as a mouse or trackball) through which the user can provide input into a computer. Other kinds of devices may also be used to provide interaction with the user. For example, the feedback provided to the user may be any form of sensory feedback (for example, visual feedback, auditory feedback, or haptic feedback); and may be in any form (including acoustic input, voice input, or tactile input) to receive input from the user.

The systems and technologies described herein can be implemented in a computing system including background components (for example, as a data server), a computing system including middleware components (for example, an application server), or a computing system including front-end components (for example, a user computer with a graphical user interface or a web browser, through which the user can interact with the implementation of the systems and technologies described herein), or a computer system including any combination of such background components, middleware components, and front-end components. The components of the system may be interconnected by any form or medium of digital data communication (such as, a communication network). Examples of communication networks include: a local area network (LAN), a wide area network (WAN), and the Internet.

The computer system may include clients and servers. The client and server are generally remote from each other and typically interact through a communication network. The client-server relation is generated by computer programs running on the respective computers and having a client-server relation with each other.

In this way, according to the technical solutions of the embodiments of the application, by acquiring a map to be detected, acquiring traffic indication information marked on the map, acquiring actual road test data of each detection area on the map, acquiring a vehicle driving behavior of each detection area according to the actual road test data of each detection area, and realizing automatic detection of the map according to the traffic indication information and the vehicle driving behavior corresponding to each detection area, an embodiment of the present disclosure can improve the detection efficiency and detection accuracy of high definition map the detection efficiency and detection accuracy of high definition map.

It should be understood that the various forms of processes shown above can be used to reorder, add, or delete steps. For example, the steps described in this application can be executed in parallel, sequentially, or in different orders. As long as the desired results of the technical solutions disclosed in this application can be achieved, there is no limitation herein.

The foregoing specific embodiments do not constitute a limitation on the protection scope of the present application. It should be understood by those skilled in the art that various modifications, combinations, sub-combinations, and substitutions may be made according to design requirements and other factors. Any modification, equivalent replacement and improvement made within the spirit and principle of this application shall be included in the protection scope of this application.

## Claims

1. A method for detecting map quality, comprising:
acquiring (101) a map to be detected;
acquiring (102) traffic indication information marked on the map;
acquiring (103) actual road test data of each detection area on the map;
acquiring (104) a vehicle driving behavior of each detection area according to the actual road test data of each detection area; and
generating (105) a detection result of the map according to the traffic indication information and the vehicle driving behavior corresponding to each detection area.

2. The method of claim 1, wherein the traffic indication information comprises at least one of the following: traffic light information, permitted driving direction information at an intersection, permitted driving direction information in a lane, lane line information, and stop line information at an intersection.

3. The method of claim 1 or 2, wherein the actual road test data comprises vehicle coordinates, and acquiring (104) the vehicle driving behavior of each detection area according to the actual road test data of each detection area comprises:
determining (203) current vehicle coordinates and vehicle coordinates within a preset range around the current vehicle coordinates, as vehicle coordinates in the detection area; and
determining (204) the vehicle driving behavior corresponding to the detection area according to the vehicle coordinates in the detection area.

4. The method of any of claims 1-3, wherein generating (105) the detection result of the map according to the traffic indication information and the vehicle driving behavior corresponding to each detection area comprises:
determining (205) whether the traffic indication information corresponding to each detection area is correct according to the traffic indication information and the vehicle driving behavior corresponding to each detection area; and
generating (205) the detection result according to a determination result.

5. The method of claim 4, wherein determining (205) whether the traffic indication information corresponding to each detection area is correct according to the traffic indication information and the vehicle driving behavior corresponding to each detection area comprises:
determining (304) whether the traffic indication information and the vehicle driving behavior corresponding to the detection area have a conflict;
in (305) response to having the conflict, determining that the traffic indication information corresponding to the detection area is incorrect; and
in (305) response to no conflict, determining that the traffic indication information corresponding to the detection area is correct.

6. The method of claim 5, wherein determining (304) whether the traffic indication information and the vehicle driving behavior corresponding to the detection area have the conflict comprises:
acquiring a preset rule logic library; and
determining whether the traffic indication information and the vehicle driving behavior corresponding to the detection area have the conflict according to the preset rule logic library.

7. The method of claim 6, wherein the preset rule logic library comprises the vehicle driving behavior that does not match the traffic indication information.

8. The method of claim 4, wherein generating (105) the detection result according to the determination result comprises:
performing (306) de-duplication processing on the traffic indication information corresponding to the detection area for which the determination result is incorrect; and
generating (306) the detection result according to the traffic indication information corresponding to the detection area after de-duplication processing.

9. An apparatus for detecting map quality (40), comprising:
a first acquisition module (41) configured to acquire a map to be detected;
a second acquisition module (42) configured to acquire traffic indication information marked on the map;
a third acquisition module (43) configured to acquire actual road test data of each detection area on the map;
a fourth acquisition module (44) configured to acquire a vehicle driving behavior of each detection area according to the actual road test data of each detection area; and
a generation module (45) configured to generate a detection result of the map according to the traffic indication information and the vehicle driving behavior corresponding to each detection area.

10. The apparatus of claim 9, wherein the traffic indication information comprises at least one of the following: traffic light information, permitted driving direction information at an intersection, permitted driving direction information in a lane, lane line information, and stop line information at an intersection.

11. The apparatus of claim 9 or 10, wherein the actual road test data comprises vehicle coordinates, and the fourth acquisition module (44) is further configured to:
determine current vehicle coordinates and vehicle coordinates within a preset range around the current vehicle coordinates, as vehicle coordinates in the detection area; and
determine the vehicle driving behavior corresponding to the detection area according to the vehicle coordinates in the detection area.

12. The apparatus of any of claims 9-11, wherein the generation module (45) comprises:
a determination unit (451) configured to determine whether the traffic indication information corresponding to each detection area is correct according to the traffic indication information and the vehicle driving behavior corresponding to each detection area; and
a generation unit (452) configured to generate the detection result according to a determination result.

13. The apparatus of claim 12, wherein the determination unit (451) comprises:
a judgment subunit (4511) configured to determine whether the traffic indication information and the vehicle driving behavior corresponding to the detection area have a conflict; and
a determination subunit (4512) configured to determine that the traffic indication information corresponding to the detection area is incorrect in response to having the conflict, and determine that the traffic indication information corresponding to the detection area is correct in response to no conflict.

14. The apparatus of claim 13, wherein the judgment subunit (4511) is further configured to:
acquire a preset rule logic library; and
determine whether the traffic indication information and the vehicle driving behavior corresponding to the detection area have the conflict according to the preset rule logic library.

15. A computer program product, comprising a computer program, wherein the computer program is configured to cause a processor to implement the method for detecting map quality of any of claims 1-8.
